# EUROPEAN PATENT SPECIFICATION

(11) **EP 1 307 043 B1**
(45) Date of publication and mention of the grant of the patent: **11.09.2013**
(21) Application number: 02356196.2
(22) Date of filing: 09.10.2002
(51) Int. Cl.: H04N 5/232

(54) **Supply of geolocalized digital images to a user**
Bereitstellung von Geolokalisierten Digitalbildern an einen Nutzer
Fourniture d'images numériques géolocalisées à un utilisateur

(30) Priority: 26.10.2001 FR 0113834
(43) Date of publication of application: 02.05.2003
(73) Proprietor: Intellectual Ventures Fund 83 LLC, Las Vegas, NV 89128 (US)
(72) Inventor: Robinson, Guy, c/o Kodak Ltd. Patent Dept., Middlesex HA1 4TY (GB); Furon, Olivier Alain, c/o Kodak Industrie Patent Dept., 71102 Chalon sur Saone Cedex (FR)
(74) Representative: Carpmaels & Ransford LLP

(56) References cited:
- EP-A- 0 844 781
- WO-A-01/45388
- WO-A-97/41513
- DE-A- 19 808 616
- US-A- 5 806 005
- PATENT ABSTRACTS OF JAPAN vol. 2000, no. 26, 1 July 2002 (2002-07-01) & JP 2001 258022 A (FUJI PHOTO FILM CO LTD), 21 September 2001 (2001-09-21)

## Description

The present invention is in the technological field of imaging; it is more particularly in the field of general public services related to digital imaging. The present invention relates to a method enabling a user equipped with a portable terminal to remotely record digital images of a given place, and to possibly be able to then exchange them rapidly and easily with other people having appropriate means. Digital image recording, i.e. shooting and saving, is operated by the remote control of a digital camera placed in the location where the image is recorded. The digital camera is remotely controlled by means of the portable terminal.

In the prior art, there are methods and devices that use functional interactions between devices far from one another. These interactions implement GPS type systems (Global Positioning System) or wireless links of the telephone network or high-frequency type.

US Patent 6,034,722 describes a method and device to remotely control a surveillance device from a command and control unit by viewing, in order to obtain, remotely and in real time, image data of the surveyed location. The surveillance device comprises a digital or analog camera. The control unit is fixed and managed by a single operator. The control unit comprises especially a display device enabling viewing of the images transmitted by the camera placed in the location to be surveyed, a keyboard with control buttons that enables giving instructions for moving and focussing the camera, or recording image data in said unit. The objective of this surveillance system is to optimize the number of operators to use only one operator, while improving the ergonomics of the workstation. The objective is also to control and exchange image data between two known fixed located points. The exchange of image data is operated between a set location to be surveyed and an operator posted around a fixed control unit, said operator surveying said remote location.

International Patent Application WO 00/49731 describes a device and method combining in a single physical unit, a wireless telephone, a PDA (Personal Digital Assistant) type electronic notebook or personal organizer, a module to take a smart card, and an address book for saving address or calendar information. The device can also integrate a GPS (Global Positioning System) to calculate and give the geographical position, by displaying it for example on the PDA's screen. Thus the device enables communication, via the wireless communication networks, with terminals so that the user issues for example article purchase orders, or updates and communicates financial information. The objective is to operate, with a multipurpose compact portable device, the collection and storage of data or data transactions that are not image data.

International Patent Application WO 97/04332 describes a system for determining, via a radio type link, the geographical coordinates of the position of a user equipped with a portable device. The portable device lets the user obtain instantaneously his geographical position and transmit this position to a processing unit located near or far from said portable device.

DE 198 08 616 A1 patent application discloses a process and a system to operate by remote control an equipment, such as for instance a camera, with a terminal. A bi-directional information channel enables data communication in the two directions according said channel, between the terminal and the equipement. The transmitted information can be, for instance; images of different events.

WO 01/45388 A2 international patent application discloses methods and apparatus for image manipulation. A digital camera is coupled to an Internet web-site for image storage and/or processing. The camera may transmit images to the web-site as they are acquired without storing acquired images in the camera itself. The transmission from the camera may be wireless. The digital camera operator may later retrieve acquired images from the web-site using a personal computer and webbrowser software.

WO 97/41513 A international patent application discloses a geographical exploration system and a geographical exploration method to allow a user to explore remote geographic locations from a user interface.

The present invention enables a user who moves equipped with a portable terminal comprising a display screen, to know the geographical coordinates of places located in a given geographical zone and identified especially by their coordinates; such a place will be called hereafter: geolocalized point. Said places include at least one digital camera. The user's portable terminal does not necessarily include a camera. The user can for example be equipped with a cellular phone or PDA (Personal Digital Assistant). These last two devices do not thus enable obtaining the recording of digital images directly. According to the present invention, the user, with his portable terminal, selects and records an image by remotely controlling the digital camera placed in the location (geolocalized point) that he selects.

It is an object of the present invention to provide a method as defined in claim 1 for supplying customized digital images of a geolocalized point, in an image database proper to a user, said method comprising the following steps:
a) based on a request executed by using a portable terminal comprising a display screen, supply on the screen of the portable terminal data enabling the determination of geolocalized points, each geolocalized point comprising a fixed digital camera in the vicinity of said geolocalized point;
b) select, using the portable terminal, a geolocalized point from among the geolocalized points supplied at step a);
c) from the portable terminal, take control of the camera of the selected geolocalized point;
d) view in real time on the screen of the portable terminal, a proposed image of the vicinity of the selected geolocalized point;
e) from the portable terminal, operate the recording of said image of the vicinity of the geolocalized point by the camera;
f) transmit and save automatically said image of the vicinity of the geolocalized point in the image database proper to the user, immediately after recording, said database being included in a storage unit external to the camera and the portable terminal;

A further object of the present invention is to provide a supply system of geolocalized digital images in an image database proper to a user as defined in claim 7 comprising:
- a portable terminal equipped with a keyboard and a display screen to view at least one geolocalized image and remotely control the recording of said image;
- a digital camera fixed in a geolocalized point to record the geolocalized image from the portable terminal;
- means of communication between the portable terminal and an online service on the one hand, then between the portable terminal and the digital camera on the other hand;
said system being characterized in that it also comprises an automatic means for transmitting and saving the proposed geolocalized image in the database proper to the user, immediately after recording said image, said database being included in a storage unit external to the camera and the portable terminal.

One of the advantages of the invention is to enable the user to record one or more images of the given geolocalized point, even if said user is not equipped with a digital camera. Another advantage for the user is that the fixed digital camera of the geolocalized point is usually placed to enable the capture of the best images of the location in the best shooting conditions. This being unlike a person who is equipped with a personal camera, and who risks not being able to record the desired image shots, if he is confronted for example in situ, with random interference elements: for example if this person is hindered by other people placed in his field of view and who prevent the recording of an image from a certain angle. Another major advantage of the invention method is that it lets the user of the portable terminal controlling the camera, place himself in the image he wishes to record, without using the help of another person to photograph him.

In summary, the invention has the advantage of providing communication means enabling a user, to interactively and remotely control a shot selected in a geolocalized point, said geolocalized point comprising at least one digital camera; said user being placed in the immediate vicinity of the geolocalized point or being placed in another place, far from the digital camera.

Other characteristics will appear on reading the following description, with reference to the drawings of the represented figures.

Figure 1 shows an overall hardware environment used to implement the invention method.

Figure 2 shows diagrammatically a device for supporting and directing the digital camera according to the invention.

The following description is a detailed description of the main embodiments of the invention, with reference to the drawings in which the same numerical references identify the same elements in each of the different figures.

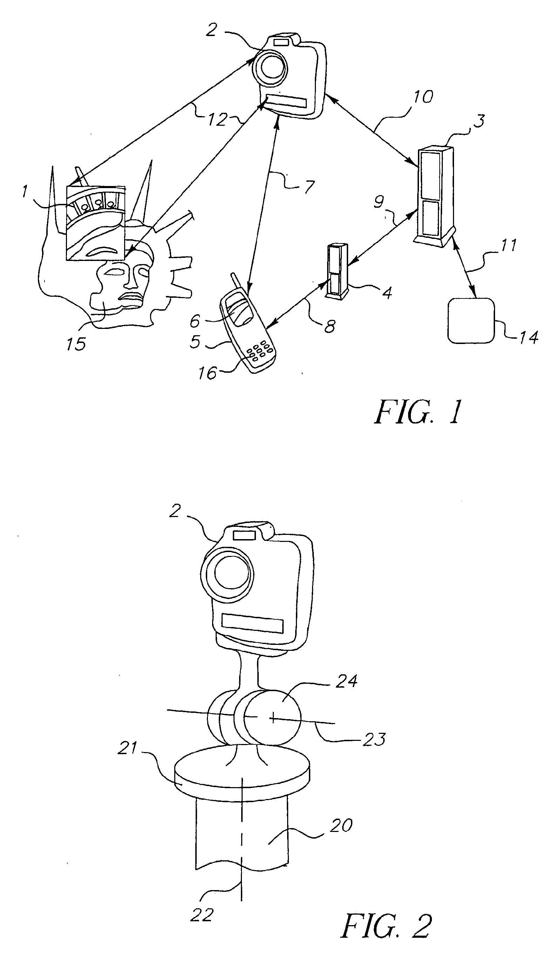

Figure 1 shows all the links and entities that materialize the implementation environment of the embodiments of the method of the present invention. The invention method enables a user to obtain at least one digital image 1 of a location he has selected to photograph, by interactively and remotely controlling a digital camera 2 placed in said location. The selected location is a geolocalized point, that can be recognized by using the GSM cellular type transmission relays (Global System for Mobile) of a wireless network. The geolocalized point 15 is for example a tourist site having special characteristics, like for example the Statue of Liberty, the Eiffel Tower, etc. One condition of implementing the invention method is that the geolocalized point includes at least one digital camera 2. The digital camera 2 is fixed, i.e. it is permanently set up at a place located in the vicinity of the geolocalized point, for example at a distance from several meters to several tens of meters from the point to be photographed. The digital camera 2 is fixed for example to a rigid support equipped with a device for the practically multidirectional orientation of said device. In a particular embodiment, the digital camera 2 is fixed onto a fixed support 20, said support 20 being placed in a geographical location (geolocalized point). The support 20 and the elements 21, 24 associated with it, enable both holding and multidirectional orientation of the digital camera 2. A rotating platform 21, solid with the support 20, rotates around an axis 22, in relation to said support 20. A base 24 fixed onto the platform 21 holds the camera 2 while letting it rotate around an axis 23, in relation to said base 24. The axes 22 and 23 are approximately perpendicular. The digital camera 2 is placed fixed in the near vicinity of the geolocalized point. The digital camera 2 is preferably a high-resolution digital camera. Such a camera enables the recording of high-resolution still digital images (for example about 250 image pixels per centimeter); these high-resolution images are thus of good quality. The camera also enables the recording of animated images, i.e. short video sequences for example. These sequences have an average length of about one to two minutes. The images can then for example be loaded or transmitted to other devices having a good display capacity and which are interfaced with said camera.

The digital camera 2, also called camera in the rest of the description, is linked to a server 3 by a link 10, letting it communicate with said server. Advantageously the link 10 is a wireless link. But the link 10 can also be a cabled link, if for example the server 3 is not too far from the camera 2. The camera 2 has several functions. The camera includes an automatic focussing function, proper to the camera, said function automatically operating when all the preliminary adjustments are finished, just before the recording of an image. In other words, the camera automatically controls the final focussing, just before the image is recorded. The camera generally also includes two adjustment functions, operated just before the final automatic focussing. A framing function, that enables the definition or selection of the frame of an image 1. The framing function includes two shooting parameters: on the one hand a shooting angle 12, which enables targeting a particular zone of an entity 15, whose image one wishes to obtain; and on the other hand a zoom, which enables obtaining the desired far off or closer up effect of the previously targeted zone. The shooting angle is obtained by making the camera 2 rotate on its movable support. The camera 2 also includes a recording function that enables the recording of the previously selected image; this is after the adjustment of the required shooting angle 12, and possibly the adjustment of the zoom's focal length. The invention method enables the use of an embodiment of the remote control and command of the digital camera 2. According to said embodiment, the user, from the portable terminal 5, takes control and command, interactively and remotely, of the recording function of the camera 2. The system enabling the implementation of the invention method comprises means to operate communications between the portable terminal 5 and an online service 14 on the one hand, then between the portable terminal 5 and the digital camera 2 on the other hand. These communication means are for example the server 3, a gateway 4, links 7, 8, 9, 10, and 11.

According to the embodiment of the invention method, the first communication means used between the portable terminal 5 and the digital camera 2 is a global link of the wireless telephone network type. The architecture of this global link lets the terminal 5 communicate with the server 3 via the gateway 4. The terminal 5 emits a message in the appropriate protocol, e.g. WAP (Wireless Application Protocol); the message transits via a gateway 4 where it is converted for example into an HTTP message (Internet) to reach the server 3. The link 8 is for example a link of the wireless telephone network, GSM (Global System for Mobile) or GPRS type (General Packet Radio System). The link 9 between the gateway 4 and the server 3 is usually a cabled link. This first embodiment lets the user of the portable terminal 5 communicate with the digital camera 2 not only by being placed in the near vicinity of the camera (several tens of meters), but also by being far from said camera (distance covered by the wireless telephone network).

According to an example useful for understanding the present invention, the second communication means used between the portable terminal 5 and the digital camera 2 is a link 7 of the high-frequency wireless type. The link 7 is for example of the DSRC type (Dedicated Short Range Communication), enabling high rate data exchanges (about one megabit per second) and using standards known to those skilled in the art, like for example the Bluetooth standard. The use of the link 7 enables the implementation of the method in the near vicinity of the camera, i.e. several meters, or even several tens of meters. Beyond this distance, this example cannot be implemented. But advantageously it supplements the embodiment, if for example the telephone network coverage operates poorly. To control the camera 2, a variant of this example enables the use, according to the link 7 and instead of the terminal 5, of a small size modular device, for example a remote control, and which implements a high-frequency wireless transmission, for example of the infrared, radio frequency or Bluetooth type.

The algorithm of the driver enables the portable terminal 5 to recognize the camera 2 and its functionalities; the driver is for example built into the server 3 or into a dedicated PC type machine linked to the camera 2; this being, if one uses the communication means of the embodiment, of the wireless telephone network type, between the portable terminal and the camera. Or the driver is for example built into the portable terminal 5 if said portable terminal is a cellular phone, and if one uses the communication means of the example, of the high-frequency type, between the portable terminal and the camera. The server 3 communicates, via for example a cabled link 11, with a network of online services of the Internet type. The user can thus, from the portable terminal 5, reach a service portal 14 in the Internet. He selects a specific heading for example linked to tourism that lets him find tourism geolocalized points including digital cameras. The user, using a simple command operated from the keyboard 16 of the portable terminal 5, runs a request that lets him be informed, by the display on the screen 6, of the tourism point(s), called geolocalized point(s). Each geolocalized point includes at least one digital camera 2. Advantageously the portable terminal 5 is a cellular phone equipped with a screen 6 with low display capacity, for example 80 by 120 pixels. But the portable terminal 5 can also be an electronic personal organizer of the PDA type, or any other portable digital device equipped with a display screen. The information or data enabling the determination of the geolocalized points are supplied to the user according to various display types on the screen 6. By means of a request to an online service 14, from the portable terminal 5, the supply of information is recovered on the screen 6 for example as a list of addresses of geolocalized points; the information enabling access to the geolocalized points can be enhanced with diagrammatic geographical maps that are displayed on the screen 6. This last option can be used if the portable terminal 5 includes for example a GPS system built into the casing of said portable terminal. The user can thus more easily go to the selected geolocalized point 15. The user can also automatically receive data about the geolocalized points via the SMS (Short Messaging System), if he subscribes for example to an online service letting him collect these data.

The request that lets the user determine the geolocalized points including at least one digital camera 2 is operated by a simple manual command on the keyboard 16 of the portable terminal 5. According to a variant of this embodiment, the invention method enables obtaining the geolocalized points nearest to the location of the portable terminal 5, at the time of the request intended to supply the data enabling the determination of the geolocalized points including a digital camera. This is done by operating a simple additional command on the keyboard 16, which consists in entering for example the distance (radius) of the area that the user desires to define. Using the displayed data enabling the determination of the geolocalized points, the user selects, from the portable terminal 5, one geolocalized point for which he has selected to take photographs. The selection is operated simply, for example using the keyboard 16, by selecting and validating the selected geolocalized point; this is if the user receives for example a list of geolocalized points. If the selected geolocalized point includes several digital cameras, the invention method lets the user select one camera 2 from among all the cameras proposed for the selected geolocalized point. The user can also use the map supplied by the GPS system, if he wants for example to move more easily to the place of the selected geolocalized point. Generally the user preferably moves physically to the selected geolocalized point, but he can also select not to move to said geolocalized point. If the user selects not to move to the place of the geolocalized point, the only restriction to the implementation of the invention method is the coverage of the wireless telephone network. The fact that the user selects not to move to the geolocalized point also implies especially that he cannot be photographed or included in the image 1 that he desires to select and record. The user, from the portable terminal 5, takes remote control of the camera 2, by using either the wireless telephone network type link, or the high-frequency type link. This step of taking control enables making sure that the camera 2 is available for the user. If not, the user automatically receives a message on the screen 6 of the portable terminal telling him that the camera 2 is unavailable. After having taken control of the camera 2, the user, from the keyboard 16 of the portable terminal 5, selects the proposed image 1 of the vicinity 15 of the selected geolocalized point. The image 1 is viewed in real time on the screen 6 of the portable terminal 5. The server 3 includes a conversion module using for example the KODAK Petite Size Imaging algorithm, to adapt the high-resolution image from the camera 2 to the screen 6 of the portable terminal 5. When the image is selected and satisfies the user, the latter remotely validates the selection, from the terminal 5, by operating a simple command using the keyboard 16. This validation automatically and immediately commands the recording of the selected image 1 by the digital camera 2. One variant of the embodiment of the invention method enables the integration of a delay, preferably of a few seconds, between the command to record the selected image 1 and the effective recording by the camera 2. This delay lets the user especially hide the portable terminal 5 (for example in his coat pocket), so that said terminal does not appear on the image 1; this is if said user selects to be photographed to be included in the image 1, without it being seen that he is holding for example his cellular phone in his hand. The invention method enables immediately after recording, the image to be automatically transmitted and saved instantly in an image database. This is to obtain the digital image recorded in the vicinity of the geolocalized point. The image database is a personal database, proper to the user. The database is included in a data storage unit external to the digital camera 2 and external to the portable terminal 5.

At the time of his connection to the service 14, the user is identified for example by means of the number of his mobile phone. This telephone number or MSISDN is unique. For example at the time of his subscription to said service, the user is allocated a reserved storage space, accessible via the Internet, also called personal database. This database is proper to the user and contains digital image data. By using the user's MSISDN (Mobile Subscriber ISDN Number), the means of the present invention enable automatic determination of the access parameters to the database proper to the user. The means of the present invention enable the user to be given the option, by display on the screen 6 of his portable terminal 5, of loading the image 1 recorded in his personal database. With the user giving his agreement, the image 1 is loaded in said database, using a standard communication protocol, for example HTTP. By connecting later to his personal account, by using for example his portable terminal 5, the user will have access to the image 1 recorded and saved in the database proper to said user.

The storage unit is either included in a server, for example the server 3, or included in a PC (Personal Computer) that can be connected for example directly to the camera 2 and placed near said camera. If the image is transmitted to a server, the digital camera includes a wireless modem, for example of the GSM or GPRS type; and the link 10 enabling communication between the camera 2 and the server, can optionally be a wireless link. The storage unit to which the images 1 are transferred enables for example a transfer of image digital data to a service provider of the mini lab, image processing kiosk, etc. type. The link with this service provider is operated via the Internet, and enables the collection of the recorded images to produce for example later printouts on other image supports (paper, fabric, etc.). The invention method also enables, in a particular embodiment, automatically carrying out invoicing just after the recording of the selected image, to an electronic account proper to the user; this electronic account is for example the invoice of the user's mobile phone.

The invention has been described in detail with reference to preferred embodiments, but it will be understood that variations and modifications can be effected within the scope of the invention. Accordingly, such embodiments are for illustration and do not restrict the claimed protection.

## Claims

1. A method for supplying customized digital images (1) of a geolocalized point, the method comprising the following steps:
a) based on a request operated by a user from a portable cellular phone or PDA (5) comprising a display screen (6) and communication means of the wireless telephone network type, supply on the screen (6) of the portable cellular phone or PDA (5) data enabling the determination of geolocalized points, each geolocalized point comprising a digital camera (2) fixed in the vicinity of said geolocalized point;
b) using the portable cellular phone or PDA (5), select a geolocalized point (15) from among the geolocalized points supplied at step a);
c) from the portable cellular phone or PDA (5), operate a communication with a wireless telephone network type link (8; 9; 10) between the cellular phone or PDA (5) and the camera (2);
d) command the camera (2) with the cellular phone or PDA (5) for selecting, from the display of the geolocalized point (15) on the screen (6), a particular zone of the geolocalized point (15) to display on the screen (6) an image (1) the user wishes;
e) from the portable cellular phone or PDA (5), operate a recording of the image (1) selected with the digital camera (2);
f) automatically transmit and save the image (1) in an image database proper to the user, immediately after recording, said database being included in a storage unit external to the camera (2) and the portable cellular phone or PDA (5).

2. The method according to claim 1, wherein the geolocalized point includes several digital cameras (2) fixed in the vicinity of said geolocalized point, and wherein step b) consists in selecting said geolocalized point and one of the several cameras available.

3. The method according to claim 1, wherein select the image (1) comprises an adjustment of a shooting angle (12) to target a frame of the image (1) displayed.

4. The method according to claim 3, comprising furthermore a zoom of the targeted image (1).

5. The method according to claim 1, wherein the operating command for recording the image (1) and the effective recording of said image (1) by the camera (2), are offset by a few seconds.

6. The method according to any one of the preceding claims, wherein invoicing is carried out automatically to an electronic account proper to the user, just after the recording of the image (1).

7. A system of supplying customized digital images (1) comprising:
- a portable cellular phone or PDA (5) equipped with a keyboard (16), a display screen (6) and communication means of the wireless telephone network type;
- a digital camera (2) fixed in a geolocalized point (15) and a wireless telephone network type link (8; 9; 10) between the portable cellular phone or PDA (5) and the digital camera (2) to take control of the camera (2) from the cellular phone or PDA (5) by a user and to record the geolocalized image from the portable cellular phone or PDA (5);
- communication means (3; 4; 11) between the portable cellular phone or PDA (5) and an online service (14);
- an automatic means for transmitting and saving the proposed geolocalized image (1) in a database proper to a user, immediately after recording said image, said database being included in a storage unit external to the camera (2) and the portable cellular phone or PDA (5);
wherein an image (1) of a particular zone of the geolocalized point (15) is selected with the keyboard (16) from the display on the screen (6) of the geolocalized point (15) and a recording of the image (1) is operated with the keyboard (16).

8. The system according to claim 7, wherein the recording function of the digital camera (2) is operated, from the portable cellular phone or PDA (5), with a link (8, 9, and 10) of the wireless telephone network type.

9. The system according to any one of claims 7 to 8, wherein the storage unit of the recorded images (1) is a personal computer (PC).

10. The system according to any one of claims 7 to 8, wherein the storage unit of the recorded images (1) is a server.

## Patentansprüche

1. Verfahren zum Liefern von kundenspezifischen digitalen Bildern (1) eines geolokalisierten Punkts, wobei das Verfahren die folgenden Schritte umfasst:
a) aufgrund einer durch einen Anwender von einem tragbaren Mobiltelefon oder einem PDA (5), das einen Anzeigebildschirm (6) und Kommunikationsmittel des drahtlosen Telefonnetztyps umfasst, durchgeführten Anfrage, Liefern von Daten, die die Bestimmung von geolokalisierten Punkten ermöglichen, auf den Bildschirm (6) des tragbaren Mobiltelefons oder des PDA (5), wobei jeder geolokalisierte Punkt eine digitale Kamera (2) umfasst, die in der Nähe des geolokalisierten Punktes befestigt ist;
b) unter Verwendung des tragbaren Mobiltelefons oder des PDA (5) Auswählen eines geolokalisierten Punktes (15) unter den in Schritt a) gelieferten geolokalisierten Punkten;
c) Durchführen einer Kommunikation mit einer drahtlosen Telefonnetztypverbindung (8; 9; 10) zwischen dem Mobiltelefon oder dem PDA (5) und der Kamera (2) von dem tragbaren Mobiltelefon oder dem PDA (5);
d) Anweisen der Kamera (2) mit dem Mobiltelefon oder dem PDA (5), um von der Anzeige des geolokalisierten Punktes (15) auf dem Bildschirm (6) einen besonderen Bereich des geolokalisierten Punktes (15) auszuwählen, um auf dem Bildschirm (6) ein Bild (1), das der Anwender wünscht, anzuzeigen;
e) Durchführen einer Aufnahme des Bildes (1), das mit der digitalen Kamera (2) ausgewählt wurde, von dem tragbaren Mobiltelefon oder dem PDA (5);
f) automatisches Senden und Speichern des Bildes (1) in einer dem Anwender eigenen Bilddatenbank unmittelbar nach der Aufnahme, wobei die Datenbank in einer Speichereinheit außerhalb der Kamera (2) und des tragbaren Mobiltelefons oder des PDA (5) enthalten ist.

2. Verfahren nach Anspruch 1, wobei der geolokalisierte Punkt mehrere Digitalkameras (2) enthält, die in der Nähe des geolokalisierten Punktes angebracht sind, und wobei der Schritt b) darin besteht, den geolokalisierten Punkt und eine der mehreren verfügbaren Kameras auszuwählen.

3. Verfahren nach Anspruch 1, wobei das Auswählen des Bildes (1) eine Anpassung eines Aufnahmewinkels (12) umfasst, um auf einen Rahmen des angezeigten Bildes (1) zu zielen.

4. Verfahren nach Anspruch 3, das weiterhin einen Zoom des ins Ziel genommenen Bildes (1) umfasst.

5. Verfahren nach Anspruch 1, wobei der Durchführungsbefehl für die Aufnahme des Bildes (1) und die tatsächliche Aufnahme des Bildes (1) durch die Kamera (2) um ein paar Sekunden versetzt sind.

6. Verfahren nach einem der vorhergehenden Ansprüche, wobei die Abrechnung gleich nach der Aufnahme des Bildes (1) automatisch auf ein dem Anwender eigenen elektronisches Konto ausgeführt wird.

7. System zum Liefern von kundenspezifischen digitalen Bildern (1), das umfasst:
- ein tragbares Mobiltelefon oder einen PDA (5), das/der mit einer Tastatur (16), einem Anzeigebildschirm (6) und Kommunikationsmitteln des drahtlosen Telefonnetztyps ausgestattet ist,
eine digitale Kamera (2), die in einem geolokalisierten Punkt (15) angebracht ist, und eine drahtlose Telefonnetztypverbindung (8; 9; 10) zwischen dem tragbaren Mobiltelefon oder dem PDA (5) und der Digitalkamera (2), um die Kontrolle über die Kamera (2) von dem Mobiltelefon oder dem PDA (5) durch einen Anwender zu übernehmen und das geolokalisierte Bild von dem tragbaren Mobiltelefon oder dem PDA (5) aufzunehmen;
- Kommunikationsmittel (3; 4; 11) zwischen dem tragbaren Mobiltelefon oder dem PDA (5) und einem Online-Dienst (14);
- automatische Mittel zum Senden und Speichern des vorgeschlagenen geolokalisierten Bildes (1) in einer dem Anwender eigenen Datenbank unmittelbar nach der Aufnahme des Bilds, wobei die Datenbank in einer Speichereinheit extern zu der Kamera (2) und dem tragbaren Mobiltelefons oder dem PDA (5) enthalten ist;
wobei ein Bild (1) eines besonderen Bereichs des geolokalisierten Punktes (15) mit der Tastatur (16) von der Anzeige auf dem Bildschirm (6) des geolokalisierten Punktes (15) ausgewählt wird und eine Aufnahme des Bildes (1) mit der Tastatur (16) durchgeführt wird.

8. System nach Anspruch 7, wobei die Aufnahmefunktion der Digitalkamera (2) von dem tragbaren Mobiltelefon oder dem PDA (5) mit einer Verbindung (8, 9, und 10) des drahtlosen Telefonnetztyps durchgeführt wird.

9. System nach einem der Ansprüche 7 bis 8, wobei die Speichereinheit der aufgezeichneten Bilder (1) ein Personalcomputer (PC) ist.

10. System nach einem der Ansprüche 7 bis 8, wobei die Speichereinheit der aufgezeichneten Bilder (1) ein Server ist.

## Revendications

1. Procédé pour fournir des images numériques personnalisées (1) d'un point géolocalisé, le procédé comprenant les étapes consistant à :
a) en fonction d'une demande effectuée par un utilisateur à partir d'un téléphone cellulaire portable ou d'un PDA (5) comprenant un écran d'affichage (6) et un moyen de communication du type réseau téléphonique sans fil, fournir sur l'écran (6) du téléphone cellulaire portable ou du PDA (5) des données permettant d'établir des points géolocalisés, chaque point géolocalisé comprenant un appareil photo numérique (2) fixé dans le voisinage dudit point géolocalisé ;
b) à l'aide du téléphone cellulaire portable ou du PDA (5), sélectionner un point géolocalisé (15) parmi les points géolocalisés fournis à l'étape a) ;
c) à partir du téléphone cellulaire portable ou du PDA (5), effectuer une communication avec une liaison du type réseau téléphonique sans fil (8 ; 9 ; 10) entre le téléphone cellulaire portable ou le PDA (5) et l'appareil photo (2) ;
d) commander l'appareil photo (2) au moyen du téléphone cellulaire ou du PDA (5) pour sélectionner, à partir de l'affichage du point géolocalisé (15) sur l'affichage (6), une zone particulière du point géolocalisé (15) pour afficher sur l'écran (6) une image (1) souhaitée par l'utilisateur ;
e) à partir du téléphone cellulaire portable ou du PDA (5), effectuer un enregistrement de l'image (1) sélectionnée au moyen de l'appareil photo numérique (2) ;
f) transmettre et sauvegarder automatiquement l'image (1) dans une base de données d'images propre à l'utilisateur, immédiatement après l'enregistrement, ladite base de données étant incorporée dans une unité de stockage externe à l'appareil photo (2) et au téléphone cellulaire portable ou au PDA (5).

2. Procédé selon la revendication 1, dans lequel le point géolocalisé comporte une pluralité d'appareils photo numériques (2) fixés dans le voisinage dudit point géolocalisé, et dans lequel l'étape b) consiste à sélectionner ledit point géolocalisé et l'un de la pluralité d'appareils photo disponibles.

3. Procédé selon la revendication 1, dans lequel la sélection de l'image (1) comprend un réglage d'un angle de prise de vue (12) pour viser un cadre de l'image (1) affichée.

4. Procédé selon la revendication 3, comprenant en outre un zoom de l'image visée (1).

5. Procédé selon la revendication 1, dans lequel la commande d'exécution pour enregistrer l'image (1) et l'enregistrement effectif de ladite image (1) par l'appareil photo (2) sont décalés de quelques secondes.

6. Procédé selon l'une quelconque des revendications précédentes, comprenant une facturation portée automatiquement à un compte électronique propre à l'utilisateur, juste après l'enregistrement de l'image (1).

7. Système pour fournir des images numériques personnalisées (1), comprenant :
- un téléphone cellulaire portable ou un PDA (5) équipé d'un clavier (16), d'un écran d'affichage (6) et d'un moyen de communication du type réseau téléphonique sans fil ;
- un appareil photo numérique (2) fixé dans un point géolocalisé (15) et une liaison du type réseau téléphonique sans fil (8 ; 9 ; 10) entre le téléphone cellulaire portable ou le PDA (5) et l'appareil photo numérique (2) pour permettre à un utilisateur de piloter l'appareil photo (2) à partir du téléphone cellulaire ou du PDA (5) et pour enregistrer l'image géolocalisée à partir du téléphone cellulaire portable ou du PDA (5)
- un moyen de communication (3 ; 4 ; 11) entre le téléphone cellulaire portable ou le PDA (5) et un service en ligne (14) ;
- un moyen automatique pour transmettre et sauvegarder l'image géolocalisée proposée (1) dans une base de données propre à un utilisateur, immédiatement après l'enregistrement de ladite image, ladite base de données étant incorporée dans une unité de stockage externe à l'appareil photo (2) et au téléphone cellulaire portable ou au PDA (5) ;
dans lequel une image (1) d'une zone particulière du point géolocalisé (15) est sélectionnée au moyen du clavier (16) à partir de l'affichage sur l'écran (6) du point géolocalisé (15) et un enregistrement de l'image (1) s'effectue au moyen du clavier (16).

8. Système selon la revendication 7, dans lequel la fonction d'enregistrement de l'appareil photo numérique (2) est mise en oeuvre, à partir du téléphone cellulaire portable ou du PDA (5), au moyen d'une liaison (8, 9 et 10) du type réseau téléphonique sans fil.

9. Système selon l'une quelconque des revendications 7 et 8, dans lequel l'unité de stockage des images enregistrées (1) est un ordinateur personnel (PC).

10. Système selon l'une quelconque des revendications 7 et 8, dans lequel l'unité de stockage des images enregistrées (1) est un serveur.
